# FASCICULE DE BREVET EUROPEEN

(11) **EP 4 051 939 B1**
(45) Date de publication et mention de la délivrance du brevet: **10.07.2024**
(21) Numéro de dépôt: 20790023.4
(22) Date de dépôt: 20.10.2020
(51) Int. Cl.: F16L 25/12, F16L 37/12

(54) **CIRCUIT DE FLUIDE, EN PARTICULIER POUR AÉRONEF, COMPRENANT UNE PREMIÈRE CANALISATION, UNE DEUXIÈME CANALISATION ET UN RACCORD DE LIAISON**
FLUIDKREISLAUF, INSBESONDERE FÜR EIN FLUGZEUG, MIT EINEM ERSTEN ROHR, EINEM ZWEITEN ROHR UND EINER KUPPLUNG
FLUID CIRCUIT, IN PARTICULAR FOR AN AIRCRAFT, COMPRISING A FIRST PIPE, A SECOND PIPE AND A COUPLING

(30) Priorité: 28.10.2019 FR 1912041
(43) Date de publication de la demande: 07.09.2022
(73) Titulaire: Airbus Atlantic, 17300 Rochefort (FR)
(72) Inventeur: PERHERIN, Daniel, 44600 SAINT NAZAIRE (FR); ROUYARD, Dimitri, 44760 LES MOUTIERS EN RETZ (FR)
(74) Mandataire: Argyma
(86) Numéro de dépôt international: PCT/EP2020/079426
(87) Numéro de publication internationale: WO 2021/083719

(56) Documents cités:
- EP-A1- 2 682 659
- WO-A1-2012/154298
- FR-A1- 2 974 613
- US-A- 4 699 403

## Description

### Domaine technique

La présente invention concerne le domaine des circuits de fluide dans un aéronef, par exemple, un circuit d'eau potable, d'eaux usées, de drainage, etc.

De manière connue, un circuit de fluide comporte une pluralité de canalisations reliées mécaniquement et fluidiquement entre elles. Lors de la mise en place d'un circuit de fluide dans un aéronef, les canalisations sont solidarisées de manière indépendante à la structure de l'aéronef puis raccordées entre elles fluidiquement. Autrement dit, les canalisations ne sont pas mobiles les unes par rapport aux autres mais fixes lors d'un raccordement, mais sujettes aux dilatations thermiques. En pratique, un faible jeu axial peut être envisagé pour permettre la prise en compte des déformations ou déplacement relatifs entre les canalisations et la structure porteuse environnante.

Pour raccorder une première canalisation à une deuxième canalisation, il est connu d'utiliser un collier de liaison qui doit être monté à l'interface entre la première canalisation et la deuxième canalisation afin d'assurer un raccordement étanche. Un tel collier de liaison est métallique et possède une masse importante. Il est équipé d'un fermoir qui doit être manipulé par l'opérateur lors de la fermeture. Dans les faits, la mise en place du collier de liaison est chronophage et peu pratique, ce qui augmente le coût de mise en place d'un circuit de fluide. En outre, le coût d'un tel collier de liaison est très élevé étant donné qu'il comporte de nombreux éléments métalliques qui doivent être assemblés ensemble, ce qui pénalise fortement le coût de revient d'un circuit de fluide d'un aéronef qui peut nécessiter plusieurs centaines de colliers de liaison.

Une solution immédiate pour éliminer cet inconvénient serait de réaliser un collier de liaison de structure identique mais en matière plastique. Néanmoins, une telle solution compliquerait l'assemblage et ne permet pas de réduire les coûts de manière significative. En particulier, la réalisation d'un fermoir robuste en matière plastique est difficile à obtenir.

L'invention a donc pour but de remédier à ces inconvénients en proposant un nouveau type de raccord de liaison et un nouveau procédé de raccordement de deux canalisations fixes, en particulier, pour une application aéronautique.

On connait du document FR2974613A1 un raccord de liaison comprenant un fourreau intérieur et deux demi-coques extérieures qui bloquent le fourreau intérieur à l'interface entre les deux canalisations à relier. Deux organes de verrouillage permettent de bloquer le raccord en position. Les deux demi-coques décrites dans le document FR2974613A1 sont articulées entre elles pour s'ouvrir et se fermer à la manière d'une mâchoire autour des deux canalisations.

Un circuit de fluide comprenant une première canalisation, une deuxième canalisation et un raccord de liaison est connu du document US4,699,403. Le raccord de liaison comprend un manchon extérieur monobloc et un organe de fermeture.

### Exposé de l'invention

### PRESENTATION DE L'INVENTION

Selon la revendication 1, l'invention concerne un circuit de fluide, en particulier pour aéronef, comprenant au moins une première canalisation, une deuxième canalisation et un raccord de liaison, chaque canalisation comportant une extrémité de connexion, s'étendant selon un axe X et définissant une surface intérieure et une surface extérieure, les extrémités de connexion des canalisations étant fixes et espacées d'un jeu de raccordement axial, le raccord de liaison étant configuré pour relier mécaniquement les deux extrémités de connexion, le raccord de liaison comprenant :
- un manchon extérieur comportant une enveloppe périphérique qui s'étend selon l'axe X et qui est configurée pour relier de manière étanche les deux extrémités de connexion, le manchon extérieur comportant au moins un premier élément de fermeture et
- un organe de fermeture comportant un deuxième élément de fermeture configuré pour coopérer avec le premier élément de fermeture par clipsage, le manchon extérieur comportant au moins une ouverture formée dans l'enveloppe périphérique, l'organe de fermeture comportant au moins un doigt de blocage configuré pour s'introduire dans l'ouverture afin de réaliser un blocage axial du manchon extérieur par rapport à au moins une extrémité de connexion.

Grâce à l'invention, le raccord de liaison peut être positionné et bloqué axialement de manière pratique et rapide par coopération par clipsage de l'organe de fermeture avec le manchon extérieur. Une telle fermeture par clipsage est avantageuse étant donné qu'elle ne nécessite avantageusement pas d'articulation mécanique. La coopération d'un doigt de blocage avec une ouverture permet à l'organe de fermeture d'entrer en contact avec les canalisations et ainsi bloquer la position axiale du raccord de liaison par rapport aux canalisations. De manière avantageuse, du fait de sa structure simple, le raccord de liaison peut être réalisé en matière plastique, ce qui diminue la masse et réduit le coût d'un tel raccord de liaison.

Selon l'invention, le manchon extérieur est monobloc et adapté pour coulisser selon l'axe X.

Un manchon extérieur monobloc, adapté pour coulisser selon l'axe X, permet une manipulation simple et rapide du raccord de liaison pour être placé dans une position verrouillée. Par le terme « monobloc », on entend que le manchon extérieur est formé d'un seul tenant sans articulation. Le raccord de liaison ne nécessite ainsi avantageusement aucune manipulation d'une articulation mécanique pour être verrouillé. Lors de l'installation du raccord de liaison dans un aéronef, un manchon extérieur monobloc est de plus facilement accessible par l'opérateur, qui n'a pas besoin de positionner par exemple une main de part et d'autre des canalisations pour fixer le raccord de liaison. Un simple coulissement le long de l'axe des canalisations permet de verrouiller le raccord de liaison par clipsage. De plus, un manchon extérieur monobloc permet avantageusement de prémonter le raccord de liaison sur l'une des canalisations, ce qui limite le nombre de pièces à manipuler et facilite le montage.

De préférence, le manchon extérieur comportant des ouvertures formées dans l'enveloppe périphérique, l'organe de fermeture comporte des doigts de blocage configurés pour s'introduire dans les ouvertures. De manière préférée, les doigts de blocage sont répartis autour du deuxième élément de fermeture de manière à guider le serrage de manière homogène.

De manière préférée, au moins une extrémité de connexion comporte au moins deux éléments de blocage écartés axialement, le doigt de blocage étant configuré pour s'étendre entre les deux éléments de blocage afin de réaliser un blocage axial. De préférence, chaque extrémité de connexion comporte au moins deux éléments de blocage écartés axialement, des doigts de blocage sont configurés pour s'étendre entre les deux éléments de blocage de chaque extrémité de connexion afin de réaliser un blocage axial global.

De préférence, le manchon extérieur comporte au moins une languette configurée pour coopérer avec une rainure de l'organe de fermeture afin de guider le serrage. Une telle languette permet avantageusement de prémonter l'organe de fermeture avec le manchon extérieur de manière à permettre une manipulation du raccord de liaison dans son ensemble. Il n'est pas nécessaire d'utiliser des pièces rapportées pour réaliser la fermeture par clipsage. De manière préférée, la languette permet de guider le serrage par clipsage. De préférence, la rainure appartient au doigt de blocage qui remplit ainsi une double fonction. On tire avantage de la longueur d'un doigt de blocage pour disposer d'une grande longueur de guidage et ainsi permettre un prémontage de l'organe de fermeture avec le manchon extérieur.

De manière préférée, le manchon extérieur est réalisé en matériau plastique. La masse et le coût d'un tel manchon extérieur sont alors fortement réduits, ce qui est avantageux dans le contexte aéronautique qui nécessite un grand nombre de raccord de liaison.

De manière préférée, le premier élément de fermeture s'étend selon sa longueur radialement à l'axe X. Cela permet avantageusement de réaliser une fermeture radiale, ce qui est avantageux lorsque les canalisations sont déjà fixées à la structure d'un aéronef. De préférence, le ou les doigts de blocage s'étendent parallèlement au premier élément de fermeture.

De préférence, le premier élément de fermeture comporte une portion centrale et deux portions latérales flexibles. De telles portions latérales flexibles se déforment élastiquement lors de la fermeture et permettent de maintenir le blocage au cours du temps.

Selon un aspect préféré, le premier élément de fermeture est du type mâle tandis que le deuxième élément de fermeture est du type femelle.

De préférence, le circuit de fluide comporte un premier organe d'étanchéité monté sur la première extrémité de connexion et un deuxième organe d'étanchéité monté sur la deuxième extrémité de connexion qui sont configurés pour être compressés radialement. De manière préférée, un organe d'étanchéité est monté entre deux éléments de blocage d'une extrémité de connexion.

De manière préférée, le circuit de fluide comporte un organe de verrouillage configuré pour bloquer un déplacement relatif du premier élément de fermeture avec le deuxième élément de fermeture en position clipsée. Ainsi, tout retrait involontaire est évité et la sécurité est augmentée.

De préférence, l'organe de verrouillage comporte au moins une broche de verrouillage configurée pour pénétrer dans une ouverture traversante du deuxième élément de fermeture ainsi que dans une ouverture traversante du premier élément de fermeture. Une telle sécurisation est robuste et observable visuellement, ce qui est avantageux lors du contrôle de la sécurisation.

De préférence, l'organe de verrouillage comporte au moins une languette de sécurisation latérale configurée pour coopérer avec un logement de guidage latéral du deuxième élément de fermeture de l'organe de fermeture. Une telle languette de sécurisation latérale permet avantageusement de prémonter l'organe de verrouillage avec l'organe de fermeture de manière à permettre une manipulation du raccord de liaison de manière unitaire.

De manière préférée, au moins une extrémité de connexion d'une des canalisations comporte un organe de compensation radial configuré pour s'étendre en saillie radiale par rapport à l'extrémité de connexion afin d'être en contact permanent avec le raccord de liaison, en particulier, lorsque l'extrémité de connexion est inclinée par rapport au raccord de liaison. L'organe de compensation radial permet de compenser tout jeu radial lorsque deux canalisations ne sont pas alignées de manière rigoureuse.

L'invention concerne un aéronef comportant un circuit de fluide tel que présenté précédemment, dans lequel la première canalisation et la deuxième canalisation sont solidarisées à une structure de l'aéronef, les extrémités de connexion des canalisations étant fixes et espacées d'un jeu de raccordement axial.

L'invention concerne en outre un procédé de raccordement d'au moins une première canalisation et d'une deuxième canalisation au moyen d'un raccord de liaison d'un circuit de fluide tel que présenté précédemment, les extrémités de connexion des canalisations étant fixes et espacées d'un jeu de raccordement axial, le raccord de liaison s'étendant sur une extrémité de connexion d'une canalisation, le procédé comprenant :
- une étape de déplacement de l'enveloppe périphérique du manchon extérieur du raccord de liaison entre les extrémités de connexion,
- une étape de déplacement du doigt de blocage de l'organe de fermeture dans l'ouverture du manchon extérieur afin de réaliser un blocage axial du manchon extérieur par rapport à au moins une extrémité de connexion et
- une étape de coopération du deuxième élément de fermeture de l'organe de fermeture avec le premier élément de fermeture du manchon extérieur par clipsage afin de sécuriser le blocage axial.

### Brève description des dessins

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :

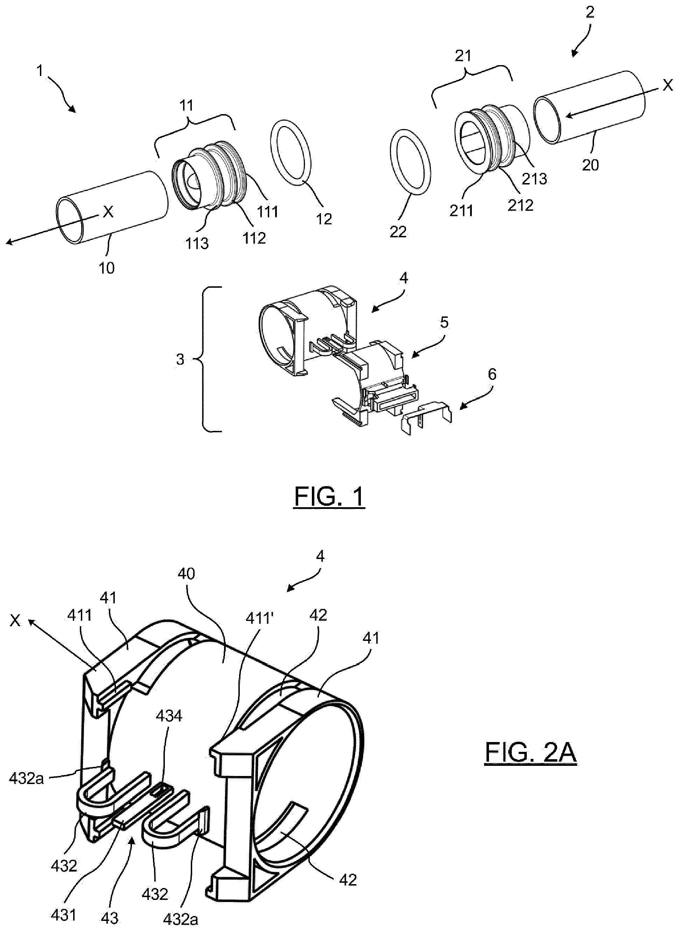

[fig.1] est une représentation schématique en éclaté d'un circuit de fluide avec un raccord de liaison selon l'invention ;
[fig.2A]
[fig.2B]

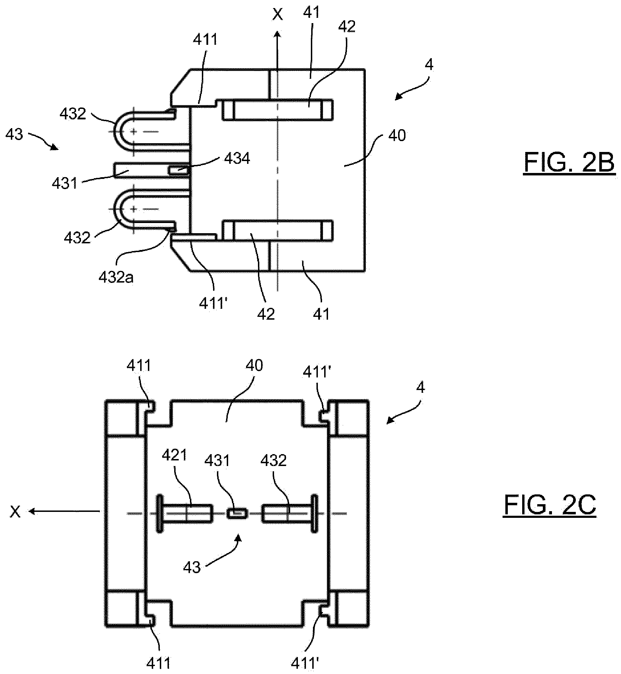

[fig.2C] sont des représentations schématiques du manchon extérieur ;
[fig.3A]
[fig.3B]
[fig.3C] sont des représentations schématiques de l'organe de fermeture ;
[fig.4] est une représentation schématique de l'organe de verrouillage ;
[fig.5A]
[fig.5B]
[fig.5C]
[fig.5D]
[fig.5E]

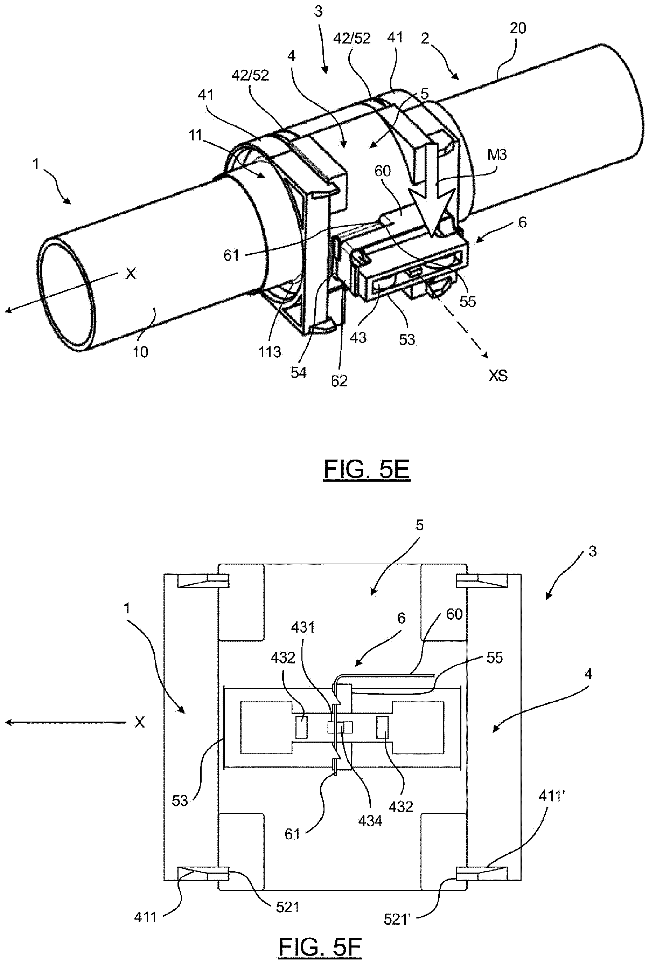

[fig.5F] et

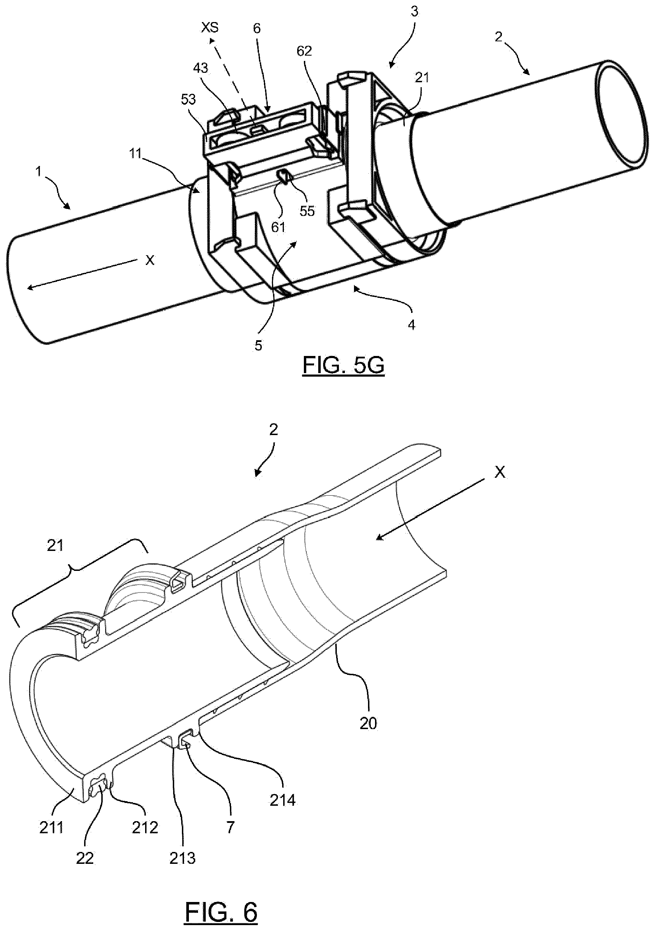

[fig.5G] sont des représentations schématiques des étapes de mise en place du raccord de liaison selon une forme de réalisation de l'invention entre deux canalisations ;
[fig.6] est une représentation schématique de l'extrémité de connexion de la deuxième canalisation avec un organe de compensation radial ;

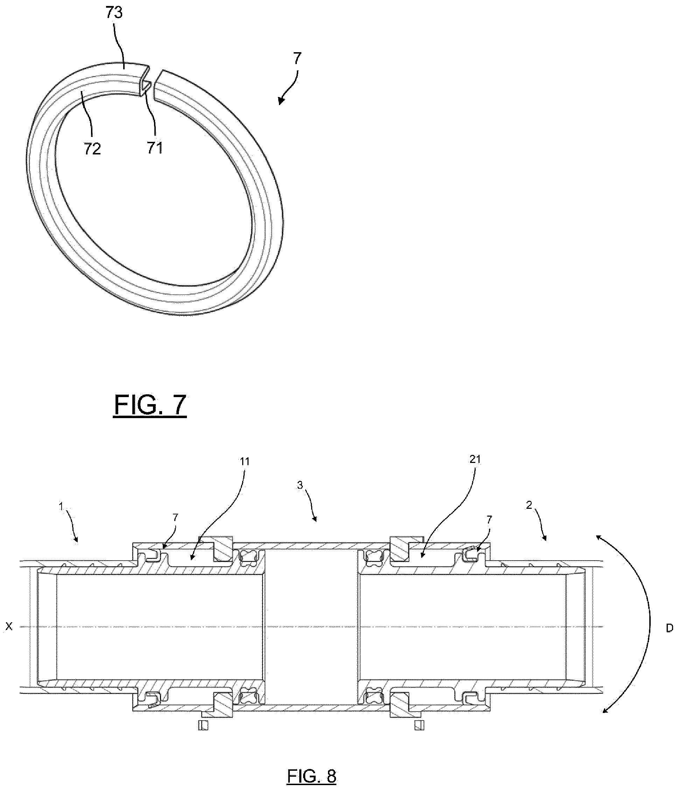

[fig.7] est une représentation schématique de l'organe de compensation radial et
[fig.8] est une représentation d'un circuit de fluide.

Il faut noter que les figures exposent l'invention de manière détaillée pour mettre en oeuvre l'invention, lesdites figures pouvant bien entendu servir à mieux définir l'invention le cas échéant.

### Description des modes de réalisation

### DESCRIPTION DETAILLEE DE L'INVENTION

Il va être dorénavant présenté un circuit de fluide selon l'invention destiné à un usage aéronautique, en particulier, pour le transport de carburant, d'eau et d'oxygène, d'air, de gaz coupe-feu, réfrigération, etc.

Dans cet exemple, le circuit de fluide comprend une pluralité de canalisations qui sont accordées les unes avec les autres afin de guider un fluide. Pour une application aéronautique, les canalisations individuelles sont, dans un premier temps, solidarisées à une structure d'un aéronef puis, dans un deuxième temps, raccordées entre elles.

Par la suite, l'invention va être présentée pour le raccordement de deux canalisations d'un circuit de fluide. Néanmoins, l'invention s'applique également au raccordement de plus de deux canalisations, en particulier, trois canalisations.

En référence à la figure 1, il est représenté une forme de réalisation d'un circuit de fluide selon l'invention qui comprend une première canalisation 1, une deuxième canalisation 2 et un raccord de liaison 3 destiné à être monté à l'interface entre la première canalisation 1 et la deuxième canalisation 2, afin de raccorder fluidiquement la première canalisation 1 à la deuxième canalisation 2.

Dans cette forme de réalisation, chaque canalisation comporte un corps tubulaire qui est terminé à chaque extrémité par un embout de connexion. Ainsi, chaque embout de connexion forme une extrémité de connexion de la canalisation. Le corps tubulaire de chaque canalisation comporte de manière préférée des portions cintrées de manière à permettre au circuit de fluide de relier différents équipements de manière pratique en s'affranchissant des contraintes de positionnement. De plus, chaque canalisation définit une surface intérieure, en contact avec le fluide à conduire, et une surface extérieure, opposée à la surface intérieure.

En référence à la figure 1, la première canalisation 1 comporte un corps tubulaire 10 comportant une extrémité de connexion 11 destinée à coopérer avec le raccord de liaison 3. De manière analogue, la deuxième canalisation 2 comporte un corps tubulaire 20 comportant une extrémité de connexion 21 destinée à coopérer avec le raccord de liaison 3. De manière préférée, chaque corps tubulaire 10, 20 comporte une ou plusieurs portions cintrées. Le diamètre du corps tubulaire et/ou de chaque extrémité de connexion est de préférence compris entre 12.7 mm et 50.8 mm. De manière préférée, chaque canalisation 1, 2 est réalisée en matériau plastique mais il va de soi que d'autres matériaux pourraient convenir, par exemple, un matériau métallique.

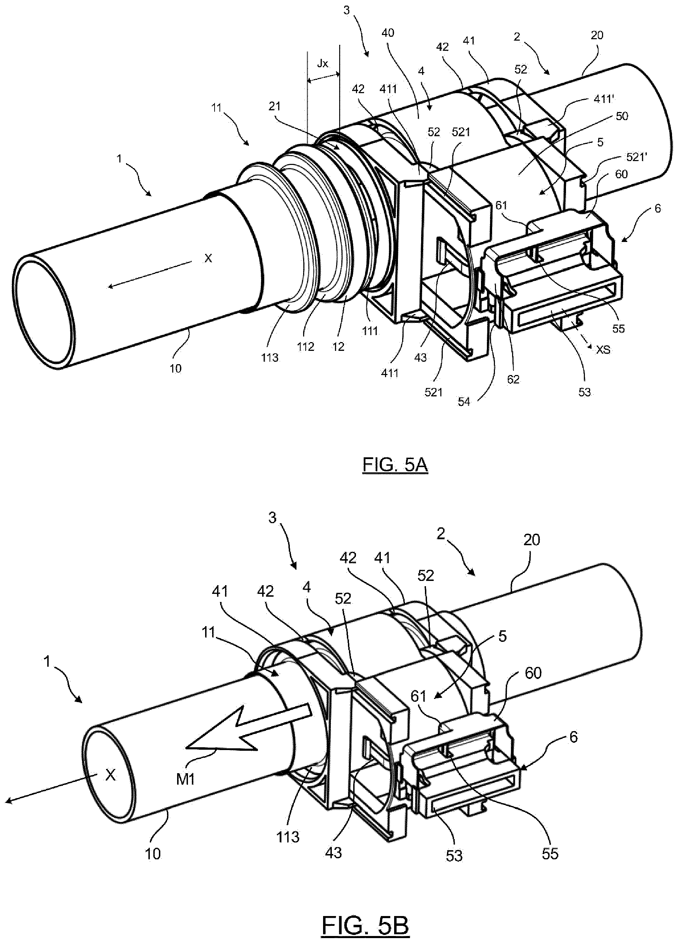

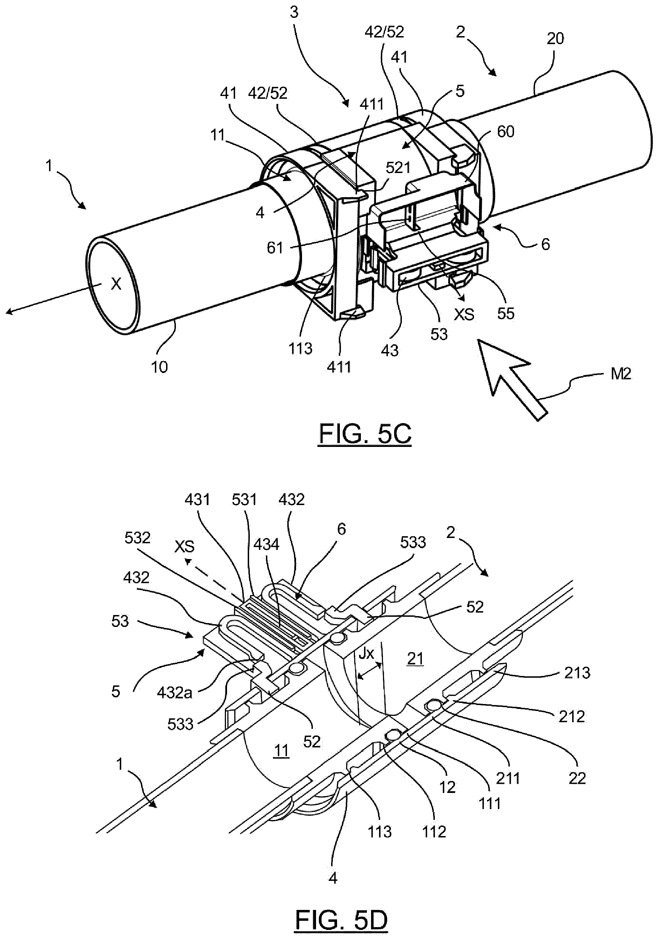

Comme cela sera présenté par la suite en référence aux figures 5A à 5G, les extrémités de connexion 11, 21 sont alignées selon un axe X et sont espacées d'un jeu de raccordement axial Jx (Figures 5A et 5D). Sur les figures, l'axe X est orienté d'amont en aval qui correspond à la direction de déplacement du raccord de liaison 3 lors d'un raccordement. Comme cela sera présenté lors de l'exemple de mise en oeuvre, le raccord de liaison 3 permet de mettre en communication fluidique les deux canalisations 1, 2 qui sont écartées.

Dans cet exemple, toujours en référence à la figure 1, l'extrémité de connexion 11 de la première canalisation 1 comporte plusieurs éléments de blocage 111, 112, 113 qui s'étendent en saillie radiale par rapport audit axe X depuis la surface extérieure. Dans cet exemple, chaque élément de blocage 111, 112, 113 se présente sous la forme d'une couronne annulaire mais il va de soi que d'autres formes pourraient convenir, en particulier, une couronne crénelée ou un ergot. De manière préférée, chaque élément de blocage 111, 112, 113 possède une épaisseur axiale de l'ordre de 2 mm et une longueur radiale comprise entre 4 mm et 8 mm par rapport à l'axe X.

De manière analogue, la deuxième extrémité 21 de la deuxième canalisation 2 comporte plusieurs éléments de blocage 211, 212, 213 qui s'étendent en saillie radiale par rapport audit axe X depuis la surface extérieure. Dans cet exemple, chaque élément de blocage 211, 212, 213 se présente sous la forme d'une couronne annulaire mais il va de soi que d'autres formes pourraient convenir. De manière analogue, chaque élément de blocage 211, 212, 213 possède une épaisseur axiale de l'ordre de 2 mm et une longueur radiale comprise entre 4 mm et 8 mm par rapport à l'axe X. Il va de soi que le nombre d'éléments de blocage 111, 112, 113, 211, 212, 213 pourrait être différent.

Dans cet exemple, chaque canalisation 1, 2 comporte un organe d'étanchéité 12, 22 monté à son extrémité de connexion 11, 21. Dans cet exemple, chaque organe d'étanchéité 12, 22 se présente sous la forme d'un anneau d'étanchéité élastique configuré pour être comprimé radialement selon l'axe X comme cela sera présenté par la suite. Chaque organe d'étanchéité 12, 22 est positionné entre deux éléments de blocage 111, 112, 211, 212 de l'extrémité de connexion 11, 21 sur lequel il est monté (voir figure 5D).

Toujours en référence à la figure 1, le circuit de fluide comporte un raccord de liaison 3 configuré pour relier mécaniquement les deux extrémités de connexion 11, 21. Le raccord de liaison 3 comprend un manchon extérieur 4, un organe de fermeture 5 et un organe de verrouillage 6. L'organe de verrouillage 6 est optionnel mais permet d'apporter une sécurité supplémentaire.

Dans cet exemple de réalisation, le manchon extérieur 4 est configuré pour s'étendre extérieurement aux extrémités de connexion 11, 21 afin de permettre d'assurer une connexion fluidique entre les canalisations 1, 2. Le manchon extérieur 4 est configuré pour comprimer les organes d'étanchéité 12, 22 montés aux extrémités de connexion 11, 21 des canalisations 1, 2 afin d'assurer une étanchéité entre les extrémités de connexion 11, 21.

Le manchon extérieur 4 est monobloc, c'est-à-dire formé d'un seul tenant, ce qui permet de s'affranchir d'une articulation mécanique qui pourrait s'user ou représenter une zone fragile.

Comme illustré aux figures 2A à 2C, le manchon extérieur 4 se présente sous la forme d'une enveloppe périphérique 40 qui s'étend axialement selon l'axe X. En position montée, le manchon extérieur 4 est adapté pour coulisser selon l'axe X sur l'extrémité de connexion 21 de la deuxième canalisation 2. Le manchon extérieur 4 comporte une extrémité aval destinée à s'étendre du côté de la première canalisation 1 en position verrouillée et une extrémité amont destinée à s'étendre du côté de la deuxième canalisation 2 en position verrouillée. L'enveloppe périphérique 40 possède un diamètre intérieur sensiblement égal au diamètre extérieur des extrémités de connexion 11, 21 des canalisations 1, 2 afin de permettre d'assurer une étanchéité lorsque les organes d'étanchéité 12, 22 sont positionnés intérieurement à l'enveloppe périphérique 40.

Dans cet exemple, le manchon extérieur 4 possède avantageusement un plan de symétrie s'étendant orthogonalement à l'axe selon lequel s'étend le manchon extérieur 4 et un plan de symétrie s'étendant longitudinalement à l'axe selon lequel s'étend le manchon extérieur 4. Cela facilite l'assemblage du raccord de liaison 3 et permet une étanchéité homogène.

Comme illustré aux figures 2A-2C, le manchon extérieur 4 comporte, à chacune de ses extrémités, une portion circonférentielle de guidage 41. Dans cet exemple, chaque portion circonférentielle de guidage 41 comporte deux languettes 411, 411', en particulier, une languette supérieure et une languette inférieure. Dans cette forme de réalisation, les languettes 411, 411' des portions circonférentielles de guidage 41 sont différentes de manière à réaliser un détrompage mais il va de soi qu'elles pourraient être identiques.

Le manchon extérieur 4 comporte en outre des ouvertures 42 formées dans l'enveloppe périphérique 40 afin de coopérer avec l'organe de fermeture 5. Dans cet exemple, les ouvertures 42 sont au nombre de 4 mais il va de soi que cela pourrait être différent. De telles ouvertures 42 permettent le passage d'éléments en saillie intérieurement à l'enveloppe périphérique 40 afin de permettre un blocage axial.

Le manchon extérieur 4 comporte en outre un premier élément de fermeture par clipsage 43, ici, du type mâle. Dans cette forme de réalisation, l'élément de fermeture 43 s'étend selon sa longueur radialement à l'axe selon lequel s'étend le manchon extérieur 4. Le premier élément de fermeture 43 comporte une portion centrale 431 et deux portions latérales 432 qui sont alignées parallèlement à l'axe selon lequel s'étend le manchon extérieur 4. Les portions latérales 432 sont flexibles de manière à se déformer lors de la fermeture. Chaque portion latérale 432 possède une forme de crochet définissant une extrémité libre 432a.

En outre, toujours en référence à la figure 2B, la portion centrale 431 comporte une ouverture traversante 434 apte à permettre le verrouillage comme cela sera présenté par la suite.

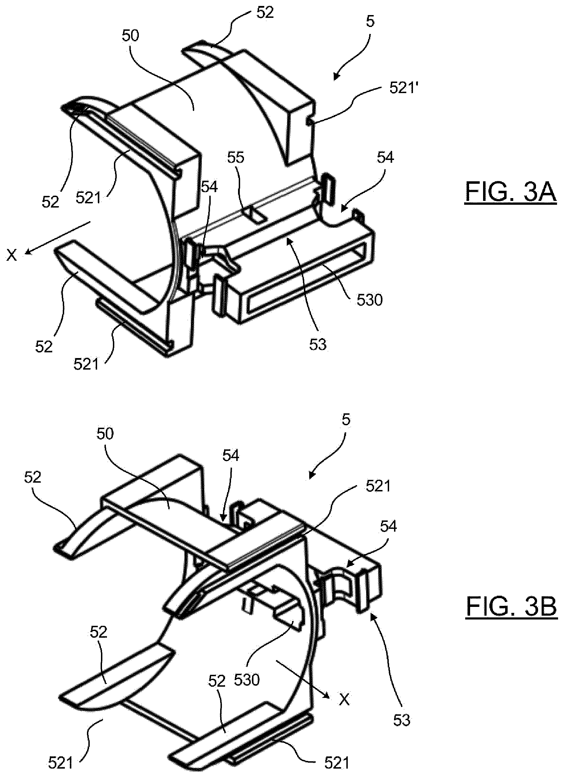

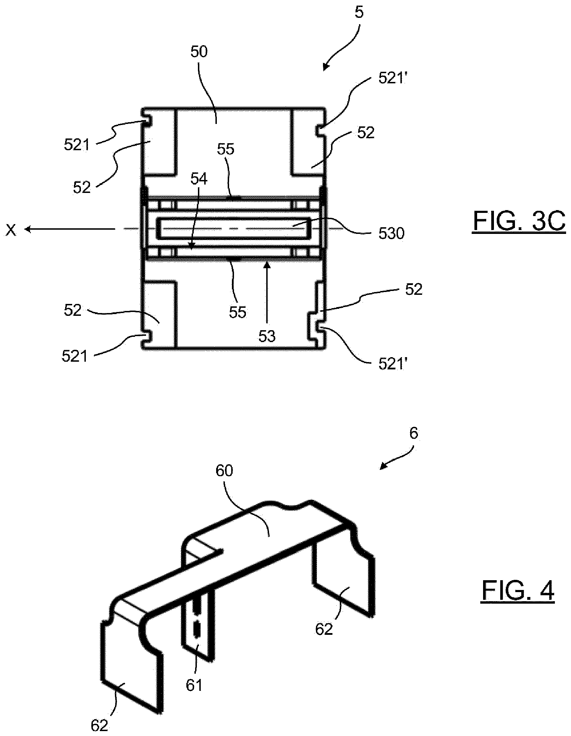

En référence aux figures 3A à 3C, il est représenté l'organe de fermeture 5 qui coopère avec le manchon extérieur 4 afin de bloquer axialement le manchon extérieur 4 en position adéquate.

L'organe de fermeture 5 possède une enveloppe incurvée 50 qui couvre, dans cet exemple, une plage angulaire de 180°.

L'organe de fermeture 5 comporte en outre un deuxième élément de fermeture par clipsage 53, ici, du type femelle. Dans cette forme de réalisation, le deuxième élément de fermeture 53 s'étend selon sa longueur radialement à l'axe selon lequel s'étend l'organe de fermeture 5. Le deuxième élément de fermeture 53 se présente sous la forme d'un logement 530 dans lequel peut s'introduire le premier élément de fermeture 43 du manchon extérieur 4 selon un axe de fermeture XS.

En référence à la figure 5D qui sera présentée de manière détaillée par la suite, le deuxième élément de fermeture 53 comporte des parois de guidage 531, 532 de la portion centrale 431 du premier élément de fermeture 43 selon l'axe de fermeture XS ainsi que des butées latérales 533 configurées pour bloquer les portions latérales 432 du premier élément de fermeture 43, en particulier, dans le sens de l'ouverture.

Les éléments de fermeture 43, 53 coopèrent par clipsage de manière à ce que l'enveloppe incurvée 50 de l'organe de fermeture 5 soit plaquée contre l'enveloppe périphérique 40 du manchon extérieure 4 et que les doigts de blocages 52 soient introduits dans les ouvertures 42.

Dans cet exemple, en référence à la figure 3A, le deuxième élément de fermeture 53 comporte une ouverture traversante 55, de préférence centrale, afin de permettre à l'organe de verrouillage 6 de verrouiller ensemble les éléments de fermeture 43, 53, en particulier, par brochage. Le deuxième élément de fermeture 53 comporte en outre deux logements de guidage latéraux 54 configurés pour guider l'organe de verrouillage 6 comme cela sera présenté par la suite.

L'organe de fermeture 5 comporte en outre des doigts de blocage 52 configurés pour s'introduire dans les ouvertures 42 du manchon extérieur 4. De manière préférée, les doigts de blocage 52 s'étendent selon des directions parallèles qui sont orthogonales à l'axe selon lequel s'étend le manchon extérieur 4, c'est-à-dire, parallèlement à l'axe de fermeture XS. Les doigts de blocage 52 sont répartis à la périphérie de l'organe de fermeture 5 de manière à permettre un guidage et un blocage uniforme lors du déplacement de l'organe de fermeture 5 en position de fermeture. Comme cela sera présenté par la suite en référence à la figure 5D, un doigt de blocage 52 est configuré pour s'étendre dans le manchon extérieur 4 entre deux éléments de blocage 112, 113, 212, 213 d'une extrémité de connexion 11, 21 afin d'empêcher tout déplacement axial du raccord de liaison 3. L'utilisation de plusieurs doigts de blocage 52 permet d'assurer un blocage homogène. Dans cet exemple, deux doigts de blocage 52 réalisent un blocage de la première extrémité de connexion 11 et deux autres doigts de blocage 52 réalisent un blocage de la deuxième extrémité de connexion 21.

De manière avantageuse, chaque doigt de blocage 52 est configuré pour être guidé par rapport aux portions circonférentielles de guidage 41 du manchon extérieur 40. En particulier, chaque doigt de blocage 52 comporte une rainure longitudinale 521, 521' pour coopérer avec une languette 411, 411' d'une portion circonférentielle de guidage 41 de manière à réaliser une fermeture maitrisée, ce qui augmenté la durée de vie et limite les défauts de positionnement. Il va de soi que les moyens de guidage pourraient être différents. Dans cette forme de réalisation, les rainure longitudinale 521, 521' des doigt de blocage 52 sont différentes de manière à réaliser un détrompage mais il va de soi qu'elles pourraient être identiques. Chaque rainure longitudinale 521, 521' est configurée pour coopérer avec une languette 411, 411'.

Dans cet exemple, l'organe de fermeture 5 possède avantageusement un plan de symétrie s'étendant orthogonalement à l'axe selon lequel s'étend l'organe de fermeture 5 et un plan de symétrie s'étendant longitudinalement à l'axe selon lequel s'étend l'organe de fermeture 5. Cela facilite l'assemblage du raccord de liaison 3 et permet une étanchéité homogène.

Dans cette forme de réalisation, il a été présenté une fermeture par clipsage dans laquelle la partie mâle est portée par le manchon extérieur 4 et la partie femelle est portée par l'organe de fermeture 5 mais il va de soi que l'inverse est possible.

En référence à la figure 4, l'organe de verrouillage 6 comporte une broche de verrouillage 61 configurée pour pénétrer dans l'ouverture traversante 55 du deuxième élément de fermeture 53 ainsi que dans l'ouverture traversante 434 de la portion centrale 431 du premier élément de fermeture 43.

Dans cette forme de réalisation, l'organe de verrouillage 6 comporte en outre des languettes de sécurisation latérales 62 qui sont reliées à la broche de verrouillage 61 par une paroi d'appui 60. Les languettes de sécurisation latérales 62 s'étendent parallèlement à la broche de verrouillage 61. Les languettes de sécurisation latérales 62 sont configurées pour coopérer respectivement avec les logements de guidage latéraux 54 du deuxième élément de fermeture 53 de l'organe de fermeture 5.

Le raccord de liaison 3 selon l'invention comporte un nombre très limité d'éléments dans cette forme de réalisation (uniquement 3), ce qui diminue son coût. En outre, de manière avantageuse, chaque élément peut être réalisé à bas coût, en particulier, par injection plastique, ce qui réduit notamment sa masse.

Selon un aspect préféré de l'invention, le raccord de liaison 3 est prémonté à une extrémité de connexion d'une canalisation. Comme illustré à la figure 5A, le raccord de liaison 3 est prémonté à la deuxième canalisation 2. Le manchon extérieur 4 enveloppe l'extrémité de connexion 21 de la deuxième canalisation 2. L'organe de fermeture 5 coopère partiellement avec le manchon extérieur 4 par coopération des languettes 411, 411' avec les rainures de guidage 521, 521' des doigts de blocage 52. Dans cette position de prémontage, les éléments de fermeture 43, 53 sont distants l'un de l'autre mais sont alignés selon l'axe de fermeture XS, qui est radial à l'axe X. De même, l'organe de verrouillage 6 est prémonté avec l'organe de fermeture 5, les languettes de sécurisation latérales 62 et la broche de verrouillage 61 sont partiellement introduites dans le deuxième élément de fermeture 53 mais ne réalisent aucun brochage. Un tel prémontage est très avantageux étant donné qu'il évite à un opérateur d'utiliser des éléments rapportés pour connecter les deux canalisations 1, 2. En effet, le raccord de liaison 3 peut être directement fermé et sécurisé.

Un prémontage permet de manière avantageuse de positionner le raccord de liaison 3 lors de la fixation des canalisations 1, 2 à une structure aéronef, ce qui procure un gain de temps important. Il va néanmoins de soi que le raccord de liaison 3 pourrait être monté postérieurement.

Il va dorénavant être présenté un procédé de raccordement d'une première canalisation 1 et d'une deuxième canalisation 2 au moyen d'un raccord de liaison 3 selon une forme de réalisation de l'invention. Dans cet exemple, les canalisations 1, 2 ont été préalablement solidarisées à une structure d'un aéronef et ne sont pas mobiles les unes par rapport aux autres.

En référence à la figure 5A, les extrémités de connexion 11, 21 des canalisations 1, 2 sont fixes et espacées d'un jeu de raccordement axial Jx, le raccord de liaison 3 est prémonté sur l'extrémité de connexion 21 de la deuxième canalisation 2 comme expliqué précédemment.

Afin de réaliser un raccordement, en référence à la figure 5B, le procédé comporte une étape de déplacement axial du raccord de liaison 3 selon l'axe X (Mouvement M1) jusqu'à s'étendre à l'interface entre les deux extrémités de connexion 11, 21 des canalisations 1, 2. De manière avantageuse, ce déplacement peut être réalisé par un opérateur en utilisant uniquement une seule de ses mains, ce qui est pratique. Un tel mouvement M1 est simple à réaliser étant donné que le diamètre interne du manchon extérieur 4 est sensiblement égal à celui des extrémités de connexion 11, 21. Dans cette position, les organes d'étanchéité 12, 22 sont situés dans le manchon extérieur 4 et les ouvertures 42 débouchent entre des éléments de blocage 112, 113, 212, 213 des extrémités de connexion 11, 21.

En référence à la figure 5C, le procédé de raccordement comprend une étape de déplacement M2 de l'organe de fermeture 5 contre le manchon extérieur 4 selon l'axe de fermeture XS. Une telle étape de déplacement M2 est maitrisée étant donné que les languettes 411, 411' du manchon extérieur 4 sont guidées dans les rainures de guidage 521, 521' de l'organe de fermeture 5 qui sont parallèles à l'axe de fermeture XS.

Lors du déplacement M2, l'utilisateur réalise un clipsage des éléments de fermeture 43, 53 qui sont alignés selon l'axe de fermeture XS. De manière plus précise, la portion centrale 431 du premier élément de fermeture 43 est reçue entre les parois de guidage 531, 532 du deuxième élément de fermeture 53 selon l'axe de fermeture XS. De manière analogue, les portions latérales 432 du premier élément de fermeture 43 se déforment lors de la coopération afin d'éviter les butées latérales 533 du deuxième élément de fermeture 53.

À la suite du deuxième déplacement M2, les éléments de fermeture 43, 53 sont clipsés l'un avec l'autre. En effet, comme illustré à la figure 5D, les extrémités libres des portions latérales 432 du premier élément de fermeture 43 sont en butée contre les butées latérales 533 du deuxième élément de fermeture 53 selon l'axe de fermeture XS. Autrement dit, lors du deuxième mouvement M2, l'organe de fermeture 5 a bloqué radialement le manchon extérieur 4. Suite au deuxième déplacement M2, les doigts de blocage 52 s'étendent dans le manchon extérieur 4 entre deux éléments de blocage 112, 113, 212, 213 d'une extrémité de connexion 11, 21 afin d'empêcher tout déplacement axial du raccord de liaison 3 qui est ainsi bloqué axialement entre les deux organes d'étanchéité 12, 22 qui assurent l'étanchéité à l'interface.

Pour libérer l'organe de fermeture 5, il suffit à l'opérateur d'appuyer sur les portions latérales flexibles 432 du premier élément de fermeture 43 qui sont accessibles via les deux logements de guidage latéraux 54 du deuxième élément de fermeture 53. Une telle libération peut être souhaitable, par exemple, lors du remplacement d'une canalisation 1, 2.

Pour sécuriser le raccord de liaison 3 en position clipsée, en référence à la figure 5E, le procédé comporte une étape de déplacement M3 de l'organe de verrouillage 6 de manière à ce que la broche de verrouillage 61 pénètre dans l'ouverture traversante 55 du deuxième élément de fermeture 53 ainsi que dans l'ouverture traversante 434 de la portion centrale 431 du premier élément de fermeture 43 comme illustré à la figure 5F. À la suite du brochage, la broche de verrouillage 61 traverse de part en part le deuxième élément de fermeture 53 comme illustré à la figure 5F.

Pour réaliser le déplacement M3, l'utilisateur exerce simplement un effort vertical sur la paroi d'appui 60 de l'organe de verrouillage 6 de manière à déplacer verticalement les languettes de sécurisation latérales 62 et la broche de verrouillage 61 dans les logements de guidage latéraux 54 et dans l'ouverture traversante 55 du deuxième élément de fermeture 53 de l'organe de fermeture 5 comme illustré aux figures 5F et 5G. Du fait du guidage, le déplacement M3 de l'organe de verrouillage 6 est maitrisé et le risque d'endommagement ou de mauvais positionnement est éliminé. En cas de mauvais positionnement relatif entre le premier élément de fermeture 43 et le deuxième élément de fermeture 53, l'organe de verrouillage 6 ne peut pas être mis en place étant donné que les ouvertures traversantes 55, 434 ne sont pas alignées. La sécurité est augmentée. La position de l'organe de verrouillage 6 est aisément observable de manière visuelle, ce qui facilite le contrôle des raccordements lors d'une inspection.

De manière avantageuse, à la suite du déplacement des languettes de sécurisation latérales 62, il n'est plus possible d'accéder au premier élément de fermeture 43 via les deux logements de guidage latéraux 54 du deuxième élément de fermeture 53. La sécurité est encore renforcée.

Grâce à l'invention, deux canalisations 1, 2 peuvent être raccordées de manière physique et fluidique par un opérateur sans risque d'erreur et de manière pratique. De manière avantageuse, il peut être aisément déterminé par inspection visuelle si un organe de verrouillage 6 n'est pas en position verrouillée.

Selon un aspect préféré de l'invention, en référence aux figures 6 à 8, l'extrémité de connexion 21 de la deuxième canalisation 2 comporte un organe de compensation radial 7 configuré pour s'étendre radialement en saillie par rapport à l'axe de l'extrémité de connexion 21. De manière préférée, l'organe de compensation radial 7 est configuré pour s'étendre en position non comprimée sur une distance radiale de l'ordre de 3 mm à 3,4 mm et se déformer élastiquement radialement, en particulier, sur une distance comprise entre 0,025 et 0,075 mm. Comme illustré à la figure 7, dans cette forme de réalisation, l'organe de compensation radial 7 se présente sous la forme d'un anneau qui est fendu. L'organe de compensation radial 7 possède une section en C définissant une branche inférieure 71, sensiblement alignée avec l'axe X, une base radiale 72 et une branche supérieure 73 qui est ici inclinée par rapport à l'axe X, en particulier, radialement vers l'extérieur. Il va de soi que l'organe de compensation radial 7 pourrait se présenter sous une forme différente, en particulier, un joint torique ou quadrilobe.

En référence à la figure 6, l'extrémité de connexion 21 comporte plusieurs éléments de blocage 211, 212, 213, 214 qui s'étendent en saillie radiale par rapport audit axe X depuis la surface extérieure et l'organe de compensation radial 7 est monté entre deux éléments de blocage 213, 214 de manière à ce que la branche supérieure 73 de l'organe de compensation radial 7 s'étende en saillie radiale par rapport aux éléments de blocage 213, 214. Comme illustré à la figure 7, lorsque les canalisations 1, 2 sont reliées par le raccord de liaison 3, les organes de compensation radiaux 7 de chaque extrémité de connexion 11, 21 de chaque canalisation 1, 2 permettent d'assurer une étanchéité par contact avec la surface intérieure du raccord de liaison 3. De manière avantageuse, du fait de l'organe de compensation radial 7, les canalisations 1, 2 peuvent avantageusement être connectées ensemble sans être parfaitement alignées selon l'axe X. En particulier, la deuxième canalisation 2 peut être inclinée d'un angle de débattement D par rapport à l'axe X. De manière préférée, l'angle de débattement D est inférieur à 7°. Grâce à l'organe de compensation radial 7, le jeu radial entre la deuxième canalisation 2 et le raccord de liaison 2 peut être compensé de manière dynamique pour tout débattement angulaire D. Cela est particulièrement avantageux Une tolérance plus importante peut ainsi être acceptée pour la fabrication et le positionnement des canalisations 1, 2.

## Revendications

1. Circuit de fluide, en particulier pour aéronef, comprenant au moins une première canalisation (1), une deuxième canalisation (2) et un raccord de liaison (3), chaque canalisation (1, 2) comportant une extrémité de connexion (11, 21), s'étendant selon un axe X et définissant une surface intérieure et une surface extérieure, les extrémités de connexion (11, 21) des canalisations (1, 2) étant fixes et espacées d'un jeu de raccordement axial (Jx), le raccord de liaison (3) étant configuré pour relier mécaniquement les deux extrémités de connexion (11, 21), le raccord de liaison (3) comprenant :
un manchon extérieur (4) monobloc comportant une enveloppe périphérique (40) qui s'étend selon l'axe X et qui est configurée pour relier de manière étanche les deux extrémités de connexion (11, 21), le manchon extérieur (4) étant adapté pour coulisser selon l'axe X, le manchon extérieur (4) comportant au moins un premier élément de fermeture (43) et
un organe de fermeture (5) comportant un deuxième élément de fermeture (53) configuré pour coopérer avec le premier élément de fermeture (43) par clipsage, le manchon extérieur (4) comportant en outre au moins une ouverture (42) formée dans l'enveloppe périphérique (40),
l'organe de fermeture (5) comportant en outre au moins un doigt de blocage (52) configuré pour s'introduire dans l'ouverture (42) afin de réaliser un blocage axial du manchon extérieur (4) par rapport à au moins une extrémité de connexion (11, 21).

2. Circuit de fluide selon la revendication 1 dans lequel, le premier élément de fermeture (43) s'étend selon sa longueur radialement à l'axe X.

3. Circuit de fluide selon l'une des revendications 1 et 2 dans lequel, le premier élément de fermeture (43) comporte une portion centrale (431) et deux portions latérales flexibles (432).

4. Circuit de fluide selon l'une des revendications 1 à 3 dans lequel, le manchon extérieur (4) comportant des ouvertures (42) formées dans l'enveloppe périphérique (40), l'organe de fermeture (5) comporte des doigts de blocage (52) configurés pour s'introduire dans les ouvertures (42).

5. Circuit de fluide selon l'une des revendications 1 à 4 dans lequel, au moins une extrémité de connexion (11, 21) comporte au moins deux éléments de blocage (112, 113, 212, 213) écartés axialement, le doigt de blocage (12) étant configuré pour s'étendre entre les deux éléments de blocage (112, 113, 212, 213) afin de réaliser un blocage axial.

6. Circuit de fluide selon l'une des revendications 1 à 5, comportant un premier organe d'étanchéité (12) monté sur la première extrémité de connexion (11) et un deuxième organe d'étanchéité (22) monté sur la deuxième extrémité de connexion (21) qui sont configurés pour être compressés radialement.

7. Circuit de fluide selon l'une des revendications 1 à 6, comportant un organe de verrouillage (6) configuré pour bloquer un déplacement relatif du premier élément de fermeture (43) avec le deuxième élément de fermeture (53) en position clipsée.

8. Circuit de fluide selon la revendication 7, dans lequel l'organe de verrouillage (6) comporte au moins une broche de verrouillage (61) configurée pour pénétrer dans une ouverture traversante (55) du deuxième élément de fermeture (53) ainsi que dans une ouverture traversante (434) du premier élément de fermeture (43).

9. Circuit de fluide selon l'une des revendications 1 à 8, dans lequel au moins une extrémité de connexion (11, 21) d'une des canalisations (1, 2) comporte un organe de compensation radial (7) configuré pour s'étendre en saillie radiale par rapport à l'extrémité de connexion (11, 22) afin de coopérer de manière étanche avec le raccord de liaison (3), en particulier, lorsque l'extrémité de connexion (11, 12) est inclinée par rapport au raccord de liaison (3).

10. Aéronef comportant un circuit de fluide selon l'une des revendications 1 à 9, dans lequel la première canalisation (1) et la deuxième canalisation (2) sont solidarisées à une structure de l'aéronef, les extrémités de connexion (11, 21) des canalisations (1, 2) étant fixes et espacées d'un jeu de raccordement axial (Jx).

11. Procédé de raccordement d'au moins une première canalisation (1) et d'une deuxième canalisation (2) au moyen d'un raccord de liaison (3) d'un circuit de fluide selon l'une des revendications 1 à 9, les extrémités de connexion (11, 21) des canalisations (1, 2) étant fixes et espacées d'un jeu de raccordement axial (Jx), le raccord de liaison (3) s'étendant sur une extrémité de connexion (11, 21) d'une canalisation (1, 2), le procédé comprenant :
une étape de déplacement de l'enveloppe périphérique (40) du manchon extérieur (4) du raccord de liaison (3) entre les extrémités de connexion (11, 21),
une étape de déplacement du doigt de blocage (52) de l'organe de fermeture (5) dans l'ouverture (42) du manchon extérieur (4) afin de réaliser un blocage axial du manchon extérieur (4) par rapport à au moins une extrémité de connexion (11, 21) et
une étape de coopération du deuxième élément de fermeture (53) de l'organe de fermeture (5) avec le premier élément de fermeture (43) du manchon extérieur (4) par clipsage afin de sécuriser le blocage axial.

## Patentansprüche

1. Fluidkreislauf, vor allem für ein Flugzeug, der mindestens eine erste Rohrleitung (1), eine zweite Rohrleitung (2) und einen Verbindungsanschluss (3) umfasst, wobei jede Rohrleitung (1, 2) ein Anschlussende (11, 21) aufweist, sich gemäß einer Achse X erstreckt und eine innere Oberfläche und eine äußere Oberfläche definiert, wobei die Anschlussenden (11, 21) der Rohrleitungen (1, 2) fest und um ein axiales Verbindungsspiel (Jx) beabstandet sind, wobei der Verbindungsanschluss (3) konfiguriert ist, um die beiden Anschlussenden (11, 21) mechanisch zu verbinden, wobei der Verbindungsanschluss (3) umfasst:
eine einteilige äußere Hülse (4), die einen Umfangsmantel (40) aufweist, der sich gemäß der Achse X erstreckt und der konfiguriert ist, um die beiden Anschlussenden (11, 21) dicht zu verbinden, wobei die äußere Hülse (4) geeignet ist, gemäß der Achse X zu gleiten, wobei die äußere Hülse (4) mindestens ein erstes Verschlusselement (43) aufweist und
ein Verschlussorgan (5), das ein zweites Verschlusselement (53) aufweist, das konfiguriert ist, um mit dem ersten Verschlusselement (43) durch Einschnappen zusammenzuwirken, wobei die äußere Hülse (4) ferner mindestens eine Öffnung (42) aufweist, die im Umfangsmantel (40) ausgebildet ist, wobei das Verschlussorgan (5) ferner mindestens einen Sperrfinger (52) aufweist, der konfiguriert ist, um in die Öffnung (42) einzugreifen, um die äußere Hülse (4) im Verhältnis zu mindestens einem Anschlussende (11, 21) axial zu blockieren.

2. Fluidkreislauf nach Anspruch 1, wobei sich das erste Verschlusselement (43) gemäß seiner Länge radial zur Achse X erstreckt.

3. Fluidkreislauf nach einem der Ansprüche 1 und 2, wobei das erste Verschlusselement (43) einen zentralen Abschnitt (431) und zwei flexible seitliche Abschnitte (432) aufweist.

4. Fluidkreislauf nach einem der Ansprüche 1 bis 3, wobei die äußere Hülse (4) Öffnungen (42) aufweist, die im Umfangsmantel (40) ausgebildet sind, wobei das Verschlussorgan (5) Sperrfinger (52) aufweist, die konfiguriert sind, um in die Öffnungen (42) einzugreifen.

5. Fluidkreislauf nach einem der Ansprüche 1 bis 4, wobei mindestens ein Anschlussende (11, 21) mindestens zwei axial beabstandete Sperrelemente (112, 113, 212, 213) aufweist, wobei der Sperrfinger (12) konfiguriert ist, um sich zwischen den beiden Sperrelementen (112, 113, 212, 213) zu erstrecken, um eine axiale Blockade durchzuführen.

6. Fluidkreislauf nach einem der Ansprüche 1 bis 5, aufweisend ein erstes Dichtungsorgan (12), das auf dem ersten Anschlussende (11) angebracht ist, und ein zweites Dichtungsorgan (22), das auf dem zweiten Anschlussende (21) angebracht ist, die konfiguriert sind, um radial zusammengedrückt zu sein.

7. Fluidkreislauf nach einem der Ansprüche 1 bis 6, aufweisend ein Verriegelungsorgan (6), das konfiguriert ist, um eine relative Verlagerung des ersten Verschlusselements (43) mit dem zweiten Verschlusselement (53) in die eingeschnappte Position zu blockieren.

8. Fluidkreislauf nach Anspruch 7, wobei das Verriegelungsorgan (6) mindestens einen Verriegelungsstift (61) aufweist, der konfiguriert ist, um in eine Durchgangsöffnung (55) des zweiten Verschlusselements (53) sowie in eine Durchgangsöffnung (434) des ersten Verschlusselements (43) einzudringen.

9. Fluidkreislauf nach einem der Ansprüche 1 bis 8, wobei mindestens ein Anschlussende (11, 21) einer der Rohrleitungen (1, 2) ein radiales Ausgleichsorgan (7) aufweist, das konfiguriert ist, um sich radial hervorstehend im Verhältnis zum Anschlussende (11, 22) zu erstrecken, um dicht mit dem Verbindungsanschluss (3) zusammenzuwirken, vor allem, wenn das Anschlussende (11, 12) im Verhältnis zum Verbindungsanschluss (3) geneigt ist.

10. Flugzeug, aufweisend einen Fluidkreislauf nach einem der Ansprüche 1 bis 9, wobei die erste Rohrleitung (1) und die zweite Rohrleitung (2) mit einer Struktur des Flugzeugs fest verbunden sind, wobei die Anschlussenden (11, 21) der Rohrleitungen (1, 2) fest und um ein axiales Verbindungsspiel (Jx) beabstandet sind.

11. Verfahren zum Anschluss mindestens einer ersten Rohrleitung (1) und einer zweiten Rohrleitung (2) mittels eines Verbindungsanschlusses (3) eines Fluidkreislaufs nach einem der Ansprüche 1 bis 9, wobei die Anschlussenden (11, 21) der Rohrleitungen (1, 2) fest und um ein axiales Verbindungsspiel (Jx) beabstandet sind, wobei sich der Verbindungsanschluss (3) auf einem Anschlussende (11, 21) einer Rohrleitung (1, 2) erstreckt, wobei das Verfahren umfasst:
einen Schritt des Verlagerns des Umfangsmantels (40) der äußeren Hülse (4) des Verbindungsanschlusses (3) zwischen den Anschlussenden (11, 21),
einen Schritt des Verlagerns des Sperrfingers (52) des Verschlussorgans (5) in die Öffnung (42) der äußeren Hülse (4), um die äußere Hülse (4) im Verhältnis zu mindestens einem Anschlussende (11, 21) axial zu blockieren, und
einen Schritt des Zusammenwirkens des zweiten Verschlusselements (53) des Verschlussorgans (5) mit dem ersten Verschlusselement (43) der äußeren Hülse (4) durch Einschnappen, um die axiale Blockade abzusichern.

## Claims

1. A fluid circuit, in particular for an aircraft, comprising at least a first pipe (1), a second pipe (2) and a coupling (3), each pipe (1, 2) comprising a connecting end (11, 21), extending along an axis X and defining an inner surface and an outer surface, the connecting ends (11, 21) of the pipes (1, 2) being fixed and spaced apart by an axial connection clearance (Jx), the coupling (3) being configured to mechanically connect the two connecting ends (11, 21), the coupling (3) comprising :
a one-piece outer sleeve (4) comprising a peripheral shell (40) which extends along the axis X and which is configured to connect the two connecting ends (11, 21) in a sealed manner, the outer sleeve (4) being adapted to slide along the axis X, the outer sleeve (4) comprising at least one first closing element (43) and a closing member (5) comprising a second closing element (53) configured to cooperate with the first closing element (43) by clip-fastening, the outer sleeve (4) further comprising at least one opening (42) formed in the peripheral shell (40),
the closing member (5) further comprising at least one immobilizing finger (52) configured to be introduced into the opening (42) in order axially immobilize the outer sleeve (4) relative to at least one connecting end (11, 21).

2. The fluid circuit according to claim 1 wherein the first closing element (43) extends along its length radially to the axis X.

3. The fluid circuit according to one of claims 1 and 2, wherein the first closing element (43) comprises a central portion (431) and two flexible lateral portions (432).

4. The fluid circuit according to one of claims 1 to 3 wherein, the outer sleeve (4) comprising openings (42) formed in the peripheral shell (40), the closing member (5) comprises immobilizing fingers (52) configured to be introduced into the openings (42).

5. The fluid circuit according to one of claims 1 to 4, wherein at least one connecting end (11, 21) comprises at least two axially spaced-apart immobilizing elements (112, 113, 212, 213), the immobilizing finger (12) being configured to extend between the two immobilizing elements (112, 113, 212, 213) in order to provide axial immobilization.

6. The fluid circuit according to one of claims 1 to 5, comprising a first sealing member (12) mounted on the first connecting end (11) and a second sealing member (22) mounted on the second connecting end (21) which are configured to be radially compressed.

7. The fluid circuit according to one of claims 1 to 6, comprising a locking member (6) configured to immobilize relative movement of the first closing element (43) with the second closing element (53) in the clip-fastened position.

8. The fluid circuit according to claim 7, wherein the locking member (6) comprises at least one locking pin (61) configured to enter a through opening (55) of the second closing element (53) as well as a through opening (434) of the first closing element (43).

9. The fluid circuit according to one of claims 1 to 8, wherein at least one connecting end (11, 21) of one of the pipes (1, 2) comprises a radial compensation member (7) configured to project radially with respect to the connecting end (11, 22) in order to cooperate in a sealed manner with the coupling (3), in particular when the connecting end (11, 12) is inclined with respect to the coupling (3).

10. An aircraft comprising a fluid circuit according to one of claims 1 to 9, wherein the first pipe (1) and the second pipe (2) are secured to a structure of the aircraft, the connecting ends (11, 21) of the pipes (1, 2) being fixed and spaced apart by an axial connection clearance (Jx).

11. A method of connecting at least a first pipe (1) and a second pipe (2) by means of a coupling (3) of a fluid circuit according to one of claims 1 to 9, the connecting ends (11, 21) of the pipes (1, 2) being fixed and spaced apart by an axial connection clearance (Jx), the coupling (3) extending over a connecting end (11, 21) of a pipe (1, 2), the method comprising :
a step of displacing the peripheral shell (40) of the outer sleeve (4) of the coupling (3) between the connecting ends (11, 21),
a step of moving the immobilizing finger (52) of the closing member (5) in the opening (42) of the outer sleeve (4) in order to provide an axial immobilization of the outer sleeve (4) with respect to at least one connecting end (11, 21) and
a step of engaging the second closing element (53) of the closing member (5) with the first closing element (43) of the outer sleeve (4) by clip-fastening in order to secure the axial immobilization.
